(19) Europäisches Patentamt / European Patent Office / Office européen des brevets

(11) **EP 1 756 654 B1**

(12) **FASCICULE DE BREVET EUROPEEN**

(45) Date de publication et mention de la délivrance du brevet:
**15.03.2017 Bulletin 2017/11**

(21) Numéro de dépôt: **05775352.7**

(22) Date de dépôt: **31.05.2005**

(51) Int Cl.:
**G02C 7/06** (2006.01)

(86) Numéro de dépôt international:
**PCT/FR2005/001329**

(87) Numéro de publication internationale:
**WO 2006/000682 (05.01.2006 Gazette 2006/01)**

(54) **LENTILLE OPHTALMIQUE PROGRESSIVE**

**PROGRESSIVES BRILLENGLAS**

**PROGRESSIVE OPHTHALMIC LENS**

(84) Etats contractants désignés:
**AT BE BG CH CY CZ DE DK EE ES FI FR GB GR HU IE IS IT LI LT LU MC NL PL PT RO SE SI SK TR**

(30) Priorité: **03.06.2004 FR 0406002**

(43) Date de publication de la demande:
**28.02.2007 Bulletin 2007/09**

(73) Titulaire: **ESSILOR INTERNATIONAL COMPAGNIE GENERALE D'OPTIQUE**
**94227 Charenton Cédex (FR)**

(72) Inventeurs:
- **CARIMALO, Céline**
  **Singapour 228719 (SG)**
- **GUILLOUX, Cyril**
  **F-75009 Paris (FR)**
- **ROLAND, Eric**
  **F-77950 Voisenon (FR)**

(74) Mandataire: **Cabinet Plasseraud**
**66 rue de la Chaussée d'Antin**
**75440 Paris Cedex 09 (FR)**

(56) Documents cités:
**EP-A1- 0 738 911     EP-A1- 0 911 672**
**FR-A- 2 704 327      FR-A- 2 769 997**
**US-A- 4 537 479**

**Description**

La présente invention a pour objet une lentille ophtalmique.

Toute lentille ophtalmique, destinée à être portée dans une monture, est associée à une prescription. La prescription en matière ophtalmique peut comprendre une prescription de puissance, positive ou négative, ainsi qu'une prescription d'astigmatisme. Ces prescriptions correspondent à des corrections à apporter au porteur des lentilles pour corriger les défauts de sa vision. Une lentille est montée dans la monture en fonction de la prescription et de la position des yeux du porteur par rapport à la monture.

Dans les cas les plus simples, la prescription se réduit à une prescription de puissance. La lentille est dite unifocale et présente un axe de symétrie. Elle est simplement montée dans la monture de sorte que la direction principale du regard du porteur coïncide avec l'axe de symétrie de la lentille.

Pour les porteurs presbytes, la valeur de la correction de puissance est différente en vision de loin et en vision de près, du fait des difficultés d'accommodation en vision de près. La prescription est alors composée d'une valeur de puissance en vision de loin et d'une addition (ou progression de puissance) représentative de l'incrément de puissance entre la vision de loin et la vision de près; ceci revient à une prescription de puissance en vision de loin et à une prescription de puissance en vision de près. Les lentilles adaptées aux porteurs presbytes sont des lentilles multifocales progressives; ces lentilles sont décrites par exemples dans FR-A-2 699 294, US-A-5 270 745 ou US-A-5 272 495, FR-A-2 683 642, FR-A-2 699 294 ou encore FR-A-2 704 327. Elles sont généralement déterminées par optimisation, à partir d'un certain nombre de contraintes imposées aux différentes caractéristiques de la lentille. Ces lentilles sont généralistes, en ce qu'elles sont adaptées aux différents besoins courants du porteur.

Pour les jeunes presbytes, il a été proposé des lentilles qui ne présentent pas une zone de vision de loin avec un point de référence, à l'inverse des lentilles multifocales progressives classiques; ces lentilles sont décrites dans FR-A-2 588 973. Ces lentilles sont prescrites uniquement en fonction de la puissance nécessaire au porteur en vision de près, indépendamment de la puissance nécessaire au porteur en vision de loin. La lentille offre une partie centrale qui présente une addition de puissance sphérique procurant au porteur une vision de près satisfaisante. Elle présente en outre une légère décroissance de puissance dans la partie supérieure, qui assure au porteur une vision nette aussi au-delà du champ habituel de vision de près. Enfin, la lentille présente un point à une valeur de puissance égale à la puissance nominale de vision de près, une zone de puissance plus élevée dans la partie inférieure du verre, et une zone de puissance plus faible dans la partie supérieure du verre.

FR-A-2 769 997 propose une lentille présentant, par rapport à une lentille multifocale progressive classique, une zone de vision de près stabilisée et plus importante, une augmentation significative des largeurs de champs en vision de près et en vision intermédiaire, ainsi qu'une réduction des aberrations et notamment de l'astigmatisme. Elle assure une correction appropriée pour des distances entre 40 et 80 cm et, dans la plupart des cas, pour des distances entre 40 cm et 2 m. Cette lentille est en fait une lentille mi-distance vision de près - vision intermédiaire, privilégiant la vision de près tout en assurant une vision nette au-delà du champ habituel de vision de près. Par contre, aucune vision de loin n'est disponible. Cette lentille solution s'avère particulièrement bien adaptée au travail sur ordinateur. Elle est prescrite aux jeunes presbytes, uniquement en fonction de la prescription en vision de près. La face arrière de la lentille est usinée pour assurer une puissance en vision de près adaptée à la prescription, sans tenir compte de la prescription en vision de loin. Il suffit de deux faces avant pour couvrir l'ensemble des besoins des porteurs.

Les lentilles multifocales, qu'elles soient progressives ou dédiées à la vision de près, peuvent comporter une face multifocale complexe (c'est-à-dire n'admettant pas d'axe de révolution, typiquement une surface portant une progression de puissance), par exemple la face opposée au porteur des lunettes, et une face sphérique ou torique, dite face de prescription. Cette face sphérique ou torique permet d'adapter la lentille à l'amétropie de l'utilisateur, de sorte qu'une lentille multifocale n'est généralement définie que par sa surface complexe. On définit pour un produit donné différentes faces complexes, en fonction de l'addition et de la base (ou sphère moyenne en vision de loin). A partir de lentilles semi-finies, dont seule la face multifocale est conformée, il est possible de préparer des lentilles adaptées à chaque porteur, par simple usinage d'une face de prescription sphérique ou torique.

Indépendamment de la prescription de puissance, il peut être proposé à un porteur une prescription d'astigmatisme. Une telle prescription est effectuée par l'ophtalmologiste, en vision de loin, sous la forme d'un couple formé d'une valeur d'axe (en degrés) et d'une valeur d'amplitude (en dioptries). Sur une surface, la valeur d'amplitude représente la différence $1/R_1 - 1/R_2$ entre les courbures principales; la valeur d'axe représente l'orientation, par rapport à un axe de référence et dans un sens de rotation convenu, de la courbure maximale $1/R_1$. En termes de prescription, la valeur d'amplitude représente la différence entre les puissances minimales et maximales dans une direction donnée et l'axe représente l'orientation de la puissance maximale. On utilise le terme astigmatisme pour désigner le couple (amplitude, angle); bien qu'il s'agisse d'un abus de langage, on utilise aussi parfois ce terme pour désigner l'amplitude de l'astigmatisme. Le contexte permet à l'homme du métier de comprendre quelle acception est entendue.

La demande de brevet français déposée le 08 août 2003 sous le numéro 03 09787 et intitulée "Procédé de détermination d'une lentille ophtalmique utilisant une prescription d'astigmatisme en vision de loin et en vision de près" propose de déterminer une lentille en fonction d'une prescription d'astigmatisme en vision et loin et en vision de près. Cette demande comprend des définitions de la puissance optique et de l'astigmatisme.

L'invention propose une lentille plus facile à supporter que les lentilles ophtalmiques classiques et plus facile à prescrire; elle permet d'assurer au porteur les avantages d'un verre unifocal en vision de loin, avec en outre une vision intermédiaire. La lentille de l'invention est notamment adaptée à des activités de presbytes ne nécessitant pas une pleine progression de puissance - typiquement une progression de puissance inférieure ou égale à 2 dioptries. La lentille de l'invention est notamment adaptée à des tâches telles que la conduite automobile.

L'invention propose en conséquence, dans un mode de réalisation, une lentille ophtalmique dédiée à la vision de loin et à la vision intermédiaire, selon la revendication 1.

La lentille peut présenter en outre l'une ou plusieurs des caractéristiques suivantes :

- la méridienne est rectiligne; dans ce cas, la surface complexe peut être symétrique par rapport à la méridienne ;
- la lentille présente, pour la partie de la lentille plus de 5 mm en dessous du centre optique, une distance entre les lignes d'isocylindre 0.50 dioptries inférieure ou égale à 10 mm;
- la lentille présente, dans la zone de vision de loin, une variation de sphère moyenne inférieure ou égale à 0,025 dioptries, pour une progression de sphère moyenne inférieure ou égale à 0,90 dioptrie ;
- la lentille présente, dans la zone de vision de loin, une variation de sphère moyenne inférieure ou égale à 0,08 dioptries, pour une progression de sphère moyenne entre 1,05 et 1,40 dioptries ;
- la lentille présente une progression de sphère moyenne entre 0,5 et 0,9 dioptries ;
- la lentille présente une progression de sphère moyenne entre 1,05 et 1,40 dioptries ;
- la lentille présente une prescription d'addition pour le porteur supérieure à la progression de sphère moyenne.

L'invention propose aussi un équipement visuel comportant au moins une telle lentille.

Dans le procédé, une lentille de l'équipement peut présenter une progression de sphère moyenne sur la surface inférieure à la différence de la puissance en vision de près et de la puissance en vision de loin prescrites au sujet.

L'invention propose enfin un procédé de montage d'une telle lentille dans un équipement visuel, selon la revendication 10.

D'autres avantages et caractéristiques de l'invention apparaîtront à la lecture de la description qui suit des modes de réalisation de l'invention, donnés à titre d'exemple et en référence aux dessins qui montrent :

- figure 1, un diagramme des courbures principales et de la sphère sur l'axe d'une lentille selon un premier mode de réalisation de l'invention ;
- figure 2, une carte de sphère moyenne de la lentille de la figure 1 ;
- figure 3, une carte de cylindre de la lentille de la figure 1 ;
- figure 4, une carte de pente de cylindre de la lentille de la figure 1 ;
- figure 5, une représentation en perspective en trois dimensions de la carte de la figure 4 ;
- figures 6 à 10, des figures similaires aux figures 1 à 5, pour une lentille selon un deuxième mode de réalisation de l'invention.

Dans la suite de la description, on considère, pour la simplicité de l'exposé, le cas d'une lentille présentant une surface complexe et une surface sphérique ou torique. La face complexe de la lentille peut être la face avant (éloignée du porteur), comme cela est le cas pour les lentilles multifocales progressives de l'état de la technique. On considère des lentilles d'un rayon de 30 mm.

De façon connue en soi, en tout point d'une surface complexe, on définit une sphère moyenne D donnée par la formule :

$$D = \frac{n-1}{2}\left(\frac{1}{R_1} + \frac{1}{R_2}\right)$$

où $R_1$ et $R_2$ sont les rayons de courbure maximal et minimal exprimés en mètres, et n l'indice du matériau constituant la lentille.

On définit aussi un cylindre C, donné par la formule:

$$C = (n-1)\left|\frac{1}{R_1} - \frac{1}{R_2}\right|$$

On appelle encore pente de cylindre la norme du vecteur gradient du cylindre. Cette définition est indépendante du repère utilisé, mais peut s'écrire, dans un repère orthonormé :

$$\left\|\overrightarrow{gradC}\right\| = \sqrt{\left(\frac{\partial C}{\partial x}\right)^2 + \left(\frac{\partial C}{\partial y}\right)^2}$$

Les caractéristiques de la face complexe de la lentille peuvent être exprimées à l'aide de la sphère moyenne et du cylindre.

L'invention propose une lentille présentant les avantages d'un verre unifocal en vision de loin, avec en outre une vision intermédiaire.

La lentille est adaptée aux situations dans lesquelles le porteur a besoin d'une vision de loin nette avec un champ dégagé, tout en sollicitant très peu ou pas du tout sa vision de près. La lentille propose une solution mieux adaptée à ce besoin, que celle fournie par une lentille multifocale progressive classique : la solution assure une vision de loin nette et large; le champ disponible en vision de loin est plus important que celui d'une lentille classique. La netteté peut s'apprécier notamment par les aberrations du verre, en particulier par le cylindre ou la pente de cylindre. La solution proposée assure aussi une bonne vision périphérique, dans les zones latérales en vision de loin.

La solution proposée offre en outre une vision intermédiaire adaptée, permettant au porteur de voir de façon satisfaisante à des distances supérieures ou égales à environ 80 cm. La lentille est en fait une lentille adaptée à la vision de loin et à la vision intermédiaire.

La lentille est notamment adaptée à la conduite automobile. Dans cette activité, les conducteurs ont essentiellement besoin d'une vision de loin dégagée, d'une vision périphérique peu perturbée en vision de loin, et d'une vision intermédiaire accessible, notamment à l'arrêt. En revanche, le porteur ne fait quasiment pas appel à la vision de près. La lentille permet donc notamment de maximiser l'acuité en vision de loin et de minimiser la distorsion dynamique. La vision de loin est donc efficace, pour l'observation de la route ou des rétroviseurs. Dans la partie inférieure de la lentille, la vision intermédiaire permet, par exemple, de consulter les instruments de navigation tel le compteur de vitesse, le bouton de contrôle du débit d'air et/ou de l'autoradio. La partie inférieure de la lentille peut être utilisée, notamment à l'arrêt en vision intermédiaire, avec une largeur de vision réduite.

La lentille présente une prescription telle que la puissance prescrite au porteur en vision de près n'est pas atteinte sur la lentille; en d'autres termes, comme indiqué plus bas, la progression de puissance optique ou de sphère moyenne de la lentille est inférieure à la différence entre la prescription du porteur en vision de près et la prescription du porteur en vision de loin. La partie inférieure de la lentille est donc une zone de vision intermédiaire, en ce que la correction fournie au porteur correspond à la correction qui lui est nécessaire en vision intermédiaire, mais pas en vision de près. La distance de vision intermédiaire est par exemple choisie de l'ordre de 80 cm.

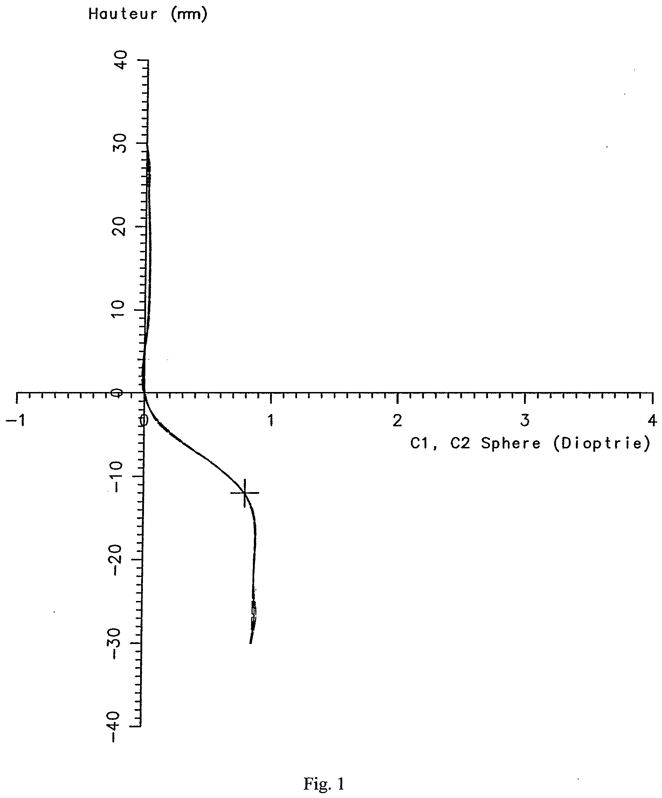

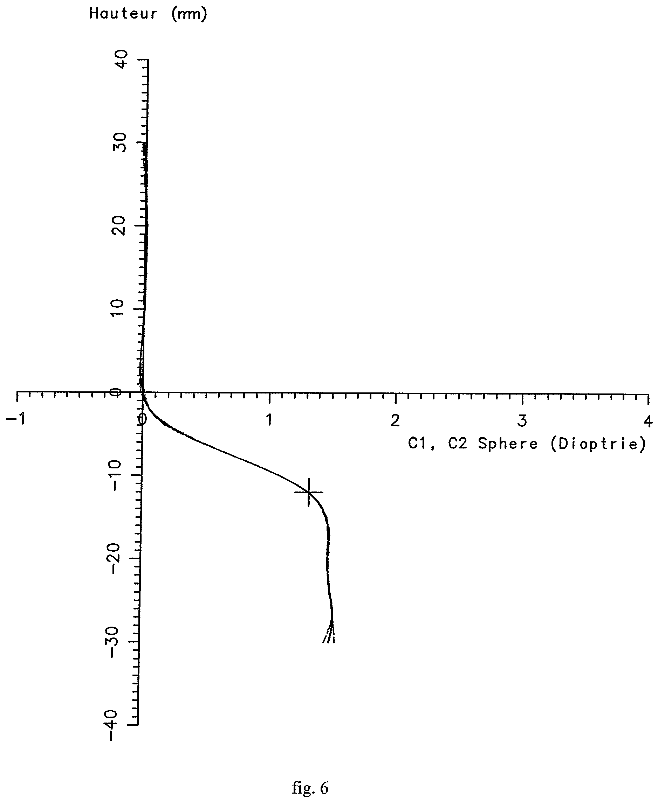

La lentille est décrite dans la suite en référence à deux modes de réalisation. Le premier mode de réalisation, représenté aux figures 1 à 5, est adapté à des porteurs presbytes présentant une prescription de progression de puissance inférieure à deux dioptries. La puissance optique varie sur la lentille de 0,75 dioptrie. Le deuxième mode de réalisation est représenté aux figures 6 à 10 et est adapté à des porteurs presbytes présentant une prescription de progression de puissance supérieure ou égale à deux dioptries. La puissance optique varie sur la lentille de 1,25 dioptries.

Dans les deux modes de réalisation décrits plus bas, la lentille est sensiblement symétrique et l'axe vertical de la lentille est une ligne ombilique, sur laquelle l'astigmatisme est nul. Ceci permet d'utiliser la même lentille pour l'oeil droit et pour l'oeil gauche. La lentille peut être montée dans la monture en gardant l'axe de symétrie vertical; en effet, en vision de loin ou en vision intermédiaire, la convergence est peu marquée et il n'est pas nécessaire que la ligne ombilique soit inclinée.

Il est aussi possible d'appliquer l'invention à des lentilles présentant une méridienne ou ligne ombilique inclinée, ou encore à une lentille dissymétrique. Il est aussi possible d'adopter pour le montage de la lentille une inclinaison de l'axe. Tel pourrait être le cas si l'activité à laquelle la lentille est dédiée implique de favoriser la vision d'un côté ou de l'autre.

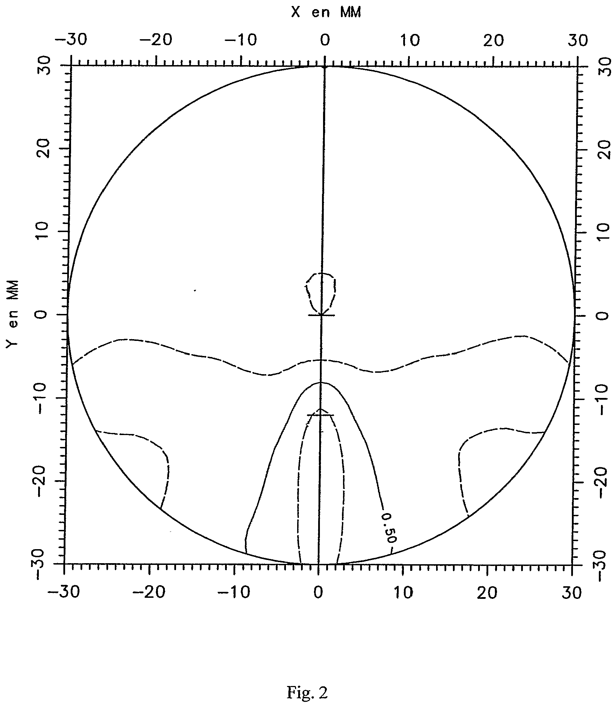

La figure 1 montre un diagramme des courbures principales et de la sphère sur l'axe d'une lentille selon un premier mode de réalisation de l'invention. Les points sur la surface complexe de la lentille sont repérées sur la figure 1 comme sur les figures 2 à 4 par rapport à un repère orthonormé, dont le centre est superposé avec le centre optique de la lentille, dont l'axe des ordonnées est vertical et dont l'axe des abscisses est horizontal. Autrement dit, l'axe de symétrie de la lentille est l'axe des ordonnées. A la figure 1 est portée sur l'axe des abscisses la courbure ou la sphère en dioptries; sur l'axe des ordonnées est repérée la position sur la lentille, en millimètres. La figure montre aussi, à l'ordonnée y = 0 mm, le point de centrage de la lentille; il s'agit d'un point, matérialisé sur la lentille, qui est utilisé par l'opticien pour le montage de la lentille dans la monture, comme expliqué plus bas.

Le point de centrage de la lentille, considéré dans la suite, est souvent confondu avec le centre géométrique de la lentille avant détourage. Plus généralement, le point de centrage peut être défini de l'une des façons suivantes :

- le point situé sur la lentille au milieu des deux gravures ;
- le point présentant le prisme prescrit au porteur en vision de loin ("centre optique") ;
- le point matérialisé sur la lentille, avant montage dans la monture, par une croix ou toute autre marque telle qu'un point entouré d'un cercle tracé sur la lentille ;
- le point utilisé par les opticiens pour positionner la lentille dans la monture.

Dans la pratique, ces définitions recouvrent le même point de la lentille. Comme expliqué plus bas, ce point est avantageusement utilisé pour le montage de la lentille dans la monture.

La figure montre en trait plein la sphère et en traits interrompus les courbures principales $1/R_1$ et $1/R_2$. Les valeurs sont normalisées à l'origine, où la sphère moyenne vaut en réalité 5.21 dioptries. On constate d'abord que le trait plein et les traits interrompus sont confondus - ce qui est représentatif d'un cylindre nul sur l'axe de la lentille.

On peut ensuite noter que la sphère moyenne sur l'axe est sensiblement constante sur la moitié supérieure de la lentille. Plus exactement, dans l'exemple de la figure 1, la différence entre la sphère moyenne sur l'axe dans la partie supérieure de la lentille et la sphère moyenne à l'origine est inférieure ou égale à 0,1 dioptrie. La variation de sphère moyenne sur l'axe dans la partie supérieure de la lentille est aussi inférieure ou égale à 0,1 dioptrie. Cette caractéristique assure que la lentille équivaut, dans sa partie supérieure et sur l'axe, à un verre unifocal. En d'autres termes, la progression de puissance s'effectue dans la partie inférieure de la lentille.

La sphère moyenne croît ensuite, pour des valeurs de l'ordonnée y entre 0 mm et -14 mm. Pour des ordonnées en dessous de y = -14 mm, la sphère moyenne est sensiblement constante, avec une valeur de l'ordre de 0.85 dioptries. La variation de sphère moyenne sur l'axe dans cette partie inférieure de la lentille est inférieure ou égale à 0,1 dioptrie.

On peut donc définir sur la lentille une progression de puissance; celle-ci correspond soit à la différence de puissance entre deux points de référence haut et bas pour la vision distante ou rapprochée, soit à une différence entre la valeur de puissance sensiblement constante dans la partie inférieure de la lentille, sur l'axe, et la valeur de puissance sensiblement constante dans la partie supérieure de la lentille, sur l'axe. Plus généralement, la progression de puissance peut être définie comme la différence entre les valeurs maximale et minimale de puissance sur l'axe de la lentille; cette définition s'applique aussi aux sphères moyennes dans l'exemple d'une lentille caractérisée par une surface complexe. Dans l'exemple de la figure 1, cette valeur de progression de puissance entre valeurs maxi et mini est de 0.90 dioptries. On peut encore définir une longueur de progression, par analogie avec la longueur de progression des lentilles multifocales. Cette longueur de progression est la distance verticale - ou la différence d'ordonnées - entre le centre optique et un point de l'axe sur lequel la différence de puissance avec le centre optique est égale à 85% de la progression de puissance. Dans l'exemple de la figure 1, en appliquant cette définition à une lentille caractérisée par une surface complexe, une sphère moyenne de 0,85 x 0,90 dioptrie, c'est-à-dire de 0,765 dioptrie est atteinte pour un point d'ordonnée y = -12 mm environ.

Le graphe de la figure 1 présente une allure similaire à l'allure d'un graphe de puissance le long de la méridienne d'une lentille ophtalmique multifocale. Toutefois, le graphe montre que la lentille ne présente pas à proprement parler de zone de vision de près. En effet, la valeur de la progression de puissance sur la lentille - ou de la progression de sphère moyenne sur la surface complexe - est de 0,90 dioptries. Cette valeur est inférieure à l'addition prescrite pour le porteur, autrement dit à la différence entre la puissance prescrite au porteur en vision de près et la puissance prescrite au porteur en vision de loin; de la sorte, il n'existe pas de zone dans laquelle le porteur subisse une correction de puissance qui correspond à la prescription de puissance en vision de près. En outre, le graphe montre que la lentille présente une longueur de progression de 12 mm, comme indiqué plus haut. Cette longueur est plus faible que les longueurs de progression habituelles pour les lentilles multifocales progressives, qui sont de l'ordre de 13 mm ou plus. Enfin, comme discuté plus bas, la lentille présente des valeurs de cylindre et de pente de cylindre élevées dans la partie inférieure de la lentille, de part et d'autre de l'axe; ces valeurs sont atteintes pour des points de la lentille proches de l'axe, dans la partie inférieure de la lentille. Ainsi, on ne retrouve pas, comme dans l'état de la technique, une zone de vision de près, aussi large que possible.

La figure 2 montre une carte de sphère moyenne de la lentille de la figure 1 ; comme cela est habituel, on a porté à la figure 2, dans un repère orthonormé, les lignes d'isosphère; ces lignes sont formées des points présentant une même valeur de la sphère moyenne. A la figure 2 sont représentées les lignes d'isosphère 0 dioptrie, 0,25 dioptrie, 0,50 dioptrie et 0,75 dioptrie. La ligne d'isosphère 0 dioptrie passe par le centre de la lentille et coupe l'axe à un point d'ordonnée 4 mm; à l'intérieur de cette ligne, la sphère est légèrement inférieure à la sphère à l'origine du repère. La ligne d'isosphère 0,25 dioptrie s'étend sensiblement horizontalement à une ordonnée de l'ordre de -5 mm. La ligne d'isosphère 0,50 dioptrie est repérée sur la figure. La ligne d'isosphère 0,75 dioptrie s'étend dans la partie inférieure de la lentille, autour de l'axe.

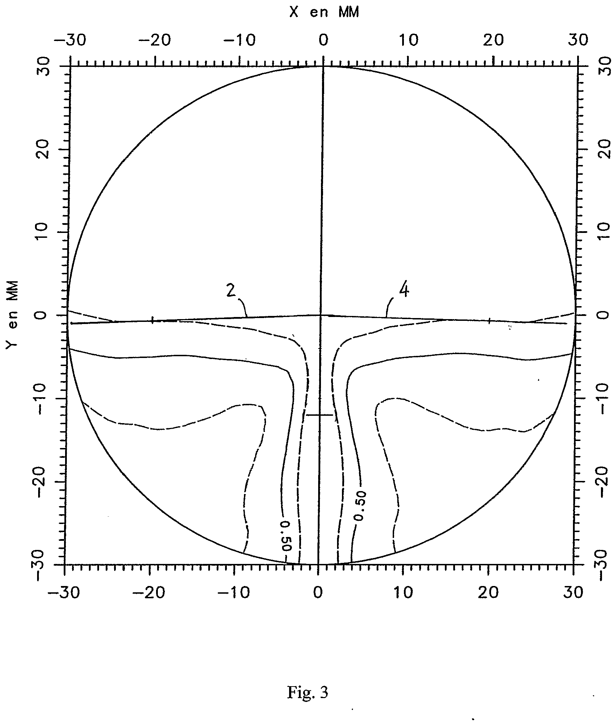

La figure 3 montre une carte de cylindre de la lentille de la figure 1. Sont représentées à la figure les lignes d'isocylindre 0,25 dioptrie, 0,50 dioptrie et 0,75 dioptrie. Ces lignes sont symétriques par rapport à l'axe vertical de la lentille. Par rapport à une lentille multifocale progressive pour presbyte de l'état de la technique, on constate que la zone de vision de loin est très dégagée : les lignes d'isocylindre 0,50 dioptrie sont dans la partie inférieure de la lentille, à des ordonnées inférieures à -4 mm. On constate aussi que les lignes d'isocylindre sont, dans la partie inférieure de la lentille, sensiblement parallèles; il n'y a donc pas de zone de vision de près, matérialisée par un élargissement de la zone entre les lignes d'isocylindre à la hauteur d'un point de référence pour la vision de près. La figure 2 montre aussi que les lignes d'isocylindre sont, pour des ordonnées au-dessus de -10 mm, sensiblement parallèles et horizontales. Cette horizontalité des lignes d'isocylindre facilite la vision périphérique et la vision dynamique dans la zone de vision de loin. La lentille assure donc une large zone de vision de loin, bien dégagée latéralement, ainsi qu'une bonne vision dynamique en vision de loin.

La zone de vision intermédiaire commence généralement, pour une lentille multifocale progressive, au niveau de la croix de montage, soit 4 mm au-dessus du centre optique de la lentille. C'est là que commence la progression de puissance. A l'inverse, comme le montre la figure 1, dans la lentille de l'invention, la progression de puissance ne commence réellement qu'en dessous du centre de la lentille, qui constitue le point de centrage de la lentille. La zone de vision de loin est donc située sur la lentille de l'invention plus bas que dans une lentille progressive multifocale habituelle, par rapport au centre géométrique de la lentille.

Dans la partie inférieure de la lentille, la lentille présente un couloir adapté à la vision intermédiaire; comme indiqué plus haut, la puissance (ou la sphère moyenne) sur la méridienne dans la partie inférieure de la lentille est sensiblement constante et correspond à la puissance prescrite au porteur pour une distance de l'ordre de 80 cm. La lentille fournit donc la correction nécessaire à une vision intermédiaire.

D'un point de vue quantitatif, on peut définir la zone de vision de loin, dans la partie supérieure de la lentille, comme le secteur angulaire dont le sommet est le centre de la lentille, et dont les côtés touchent les lignes d'isocylindre 0,25 dioptrie. En d'autres termes, il s'agit du secteur angulaire de sommet l'origine, présentant le plus grand angle possible et ne contenant que des points de cylindre inférieur ou égal à 0,25 dioptries. La zone de vision de loin peut aussi être définie comme la zone de la lentille s'étendant, dans la partie supérieure de la lentille, à l'intérieur d'un secteur angulaire dont le sommet est le centre géométrique de la lentille et dont les bords passent par l'intersection des lignes isocylindres 0.25 dioptries avec un cercle de diamètre 40 mm. On a représenté à la figure 3 les lignes 2 et 4 qui limitent ce secteur angulaire. L'angle au centre est de l'ordre de 183°, les lignes 2 et 4 étant quasiment horizontales. Les variations de sphère dans la zone de vision de loin sont de l'ordre de 0,024 dioptrie.

Dans la partie inférieure de la lentille, les lignes d'isocylindre 0,25 et 0,50 dioptrie sont quasiment parallèles et verticales. Sur le côté droit de la lentille, la ligne d'isocylindre 0,25 dioptrie, dans la partie de la lentille d'ordonnée inférieure à -5 mm, présente des abscisses comprises entre 1,_____ et 3 mm. La variation d'abscisses est donc inférieure ou égale à 2 mm. De même, pour des ordonnées en dessous de -7 mm, la ligne d'isocylindre 0,50 dioptrie présente des valeurs d'abscisses entre 3 et 5 mm. La variation d'abscisses est encore inférieure ou égale à 2 mm. La largeur maximale entre les lignes d'isocylindre 0.50 dioptrie est de l'ordre de 10 mm, pour une ordonnée de l'ordre de -22 mm. Ainsi, la zone du verre de largeur maximale entre les isocylindres 0,50 dioptries ne peut constituer une zone de vision de près similaire à celle définie sur des lentilles ophtalmiques multifocales généralistes de l'état de la technique: par rapport à de telles lentilles, elle s'étend trop bas sur la lentille, et sur une largeur insuffisante.

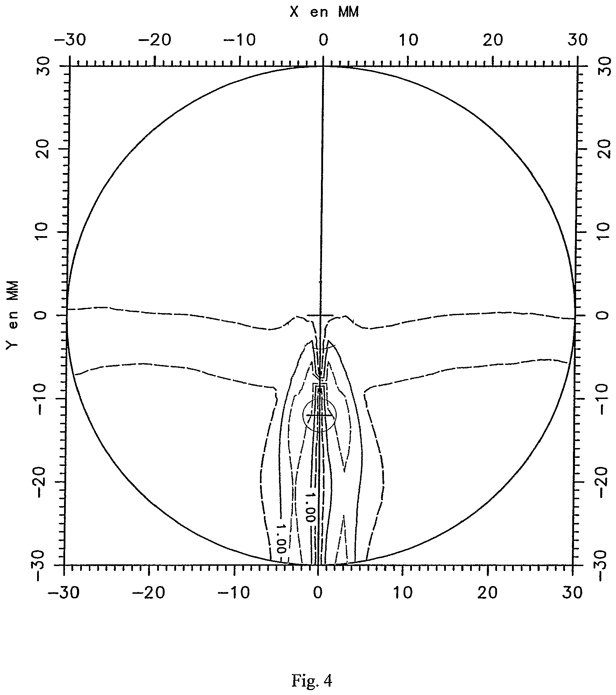

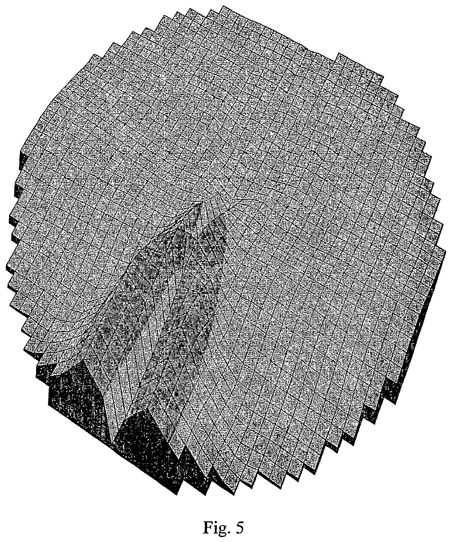

La figure 4 montre une carte de pente de cylindre de la lentille de la figure 1, tandis que la figure 5 est une vue en perspective en trois dimensions de la carte de la figure 4. La figure 4 montre les lignes formées des points présentant les mêmes valeurs de pente de cylindre, qualifiées dans la suite d'isopentes de cylindre. Sont représentées à la figure les isopentes 0,50 dioptrie/mm, 1 dioptrie/mm et 1,5 dioptries/mm. Les figures 4 et 5 montrent que la pente de cylindre est sensiblement nulle dans toute la partie supérieure de la lentille, au-dessus du centre. Ceci facilite la vision dynamique et la vision périphérique dans la partie supérieure de la lentille. Ces figures montrent encore que les valeurs de pente de cylindre sont maximales dans la partie inférieure de la lentille, pour des valeurs d'ordonnées en dessous de y = -3 mm, pour des valeurs d'abscisses de l'ordre de ±5 mm. De nouveau, ces valeurs concentrées autour de l'axe interdisent toute vision de près, autrement que sur l'axe lui-même. La figure 5 montre comment les valeurs de pente de cylindre sont maximales de part et d'autre de l'axe, dans la partie inférieure de la lentille. Les aberrations sont ainsi concentrées dans la partie inférieure de la lentille, qui n'est pas utilisée.

Le fait que les lignes d'isocylindre sont sensiblement horizontales dans la partie médiane de la lentille et sensiblement verticales dans la partie inférieure de la lentille peut aussi s'exprimer par les valeurs du gradient de cylindre, dans la partie supérieure de la lentille qui correspond à la zone de vision de loin et dans les parties inférieures droite et gauche de la lentille. Dans l'exemple de la figure 4, le gradient de cylindre est inférieur à 0,50 dioptrie/mm dans la zone de vision de loin telle que définie plus haut; le gradient de cylindre est aussi inférieur à cette valeur dans la partie supérieure de la lentille, pour des ordonnées supérieures ou égales à 2 mm, quelles que soient les valeurs de l'abscisse. En outre, dans les parties inférieures droite et gauche de la lentille, définie par les inégalités /

y -10 mm et
x 10 mm (pour la partie droite sur la figure) ou x -10 mm (pour la partie gauche sur la figure)

le gradient de cylindre est aussi inférieur ou égale à 0,50 dioptrie/mm. Le gradient de cylindre présente des valeurs inférieures ou égales à 1 dioptrie/mm sur toute la surface de la lentille, sauf sur la partie de la lentille autour de la verticale, dans la partie inférieure de la lentille. Les valeurs supérieures ou égales à 1 dioptrie/mm sont atteintes dans une bande verticale de largeur inférieure à 10 mm, dans la partie inférieure de la lentille (y 0).

Les figures 6 à 10 sont des vues similaires à celles des figures 1 à 5, mais pour une lentille présentant une progression de puissance de 1,25 dioptries sur la surface complexe. Cette progression de puissance est, comme dans l'exemple précédent, inférieure à la prescription d'addition du porteur.

On retrouve sur la figure 6 les caractéristiques déjà mises en évidence à la figure 1 - à ceci près que la progression de sphère moyenne sur la méridienne est de l'ordre de 1,25 dioptries et non plus de 0,75 dioptrie. La sphère moyenne à l'origine est de 5.21 dioptries.

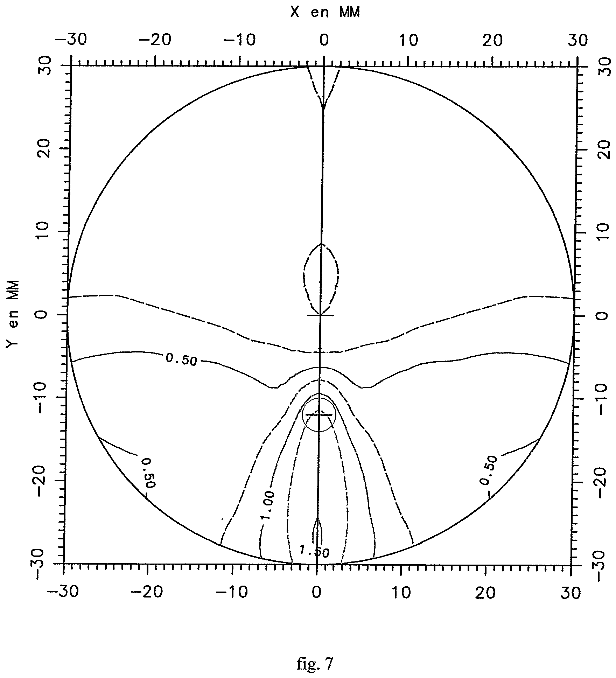

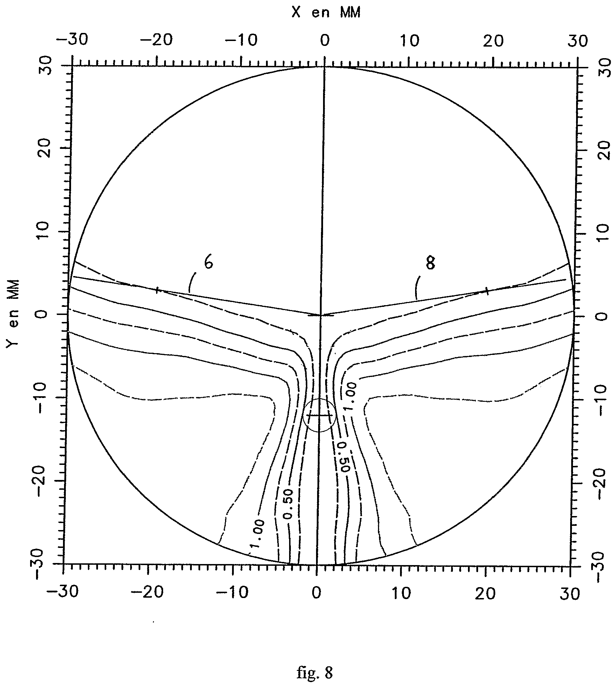

La figure 7 montre les lignes d'isosphère de 0,25 à 1,50 dioptries, avec un pas de 0,25 dioptrie. La figure 8 montre les lignes d'isocylindre de 0,25 à 1,25 dioptries, avec un pas de 0,25 dioptries. Comme à la figure 3, on a représenté les lignes 6 et 8 délimitant un secteur angulaire contenant les points de cylindre inférieur à 0,25 dioptrie dans un cercle de diamètre 40 mm centré sur le centre géométrique de la lentille. L'angle au centre de ce secteur est de l'ordre de 162° sur un diamètre 40 mm. On vérifie sur la figure 8 comme sur la figure 3 que les lignes d'isocylindre 0,25 et 0,50 dioptries sont quasiment parallèles (les mêmes inégalités se vérifiant) et que la largeur maximale entre les lignes d'isocylindre 0,50 dioptrie est de l'ordre de 10 mm. Les variations de sphère dans la zone de vision de loin sont de l'ordre de 0,077 dioptrie.

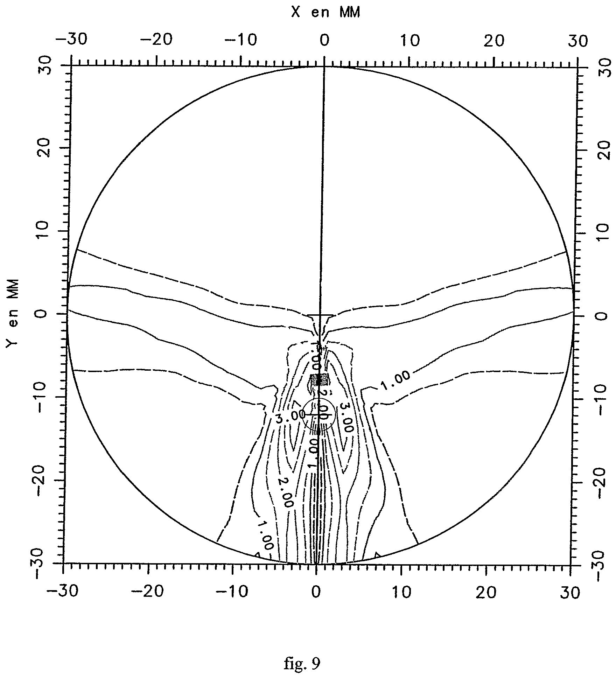

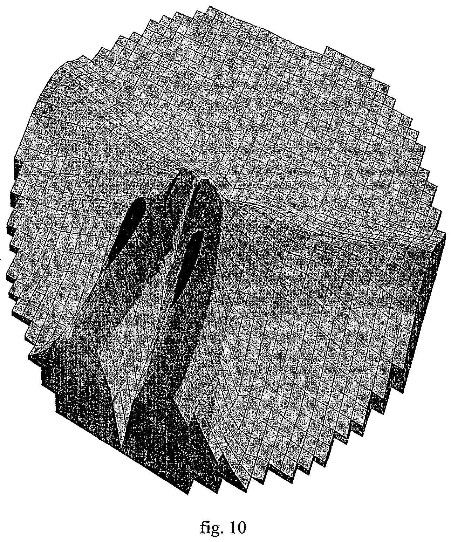

Les figures 9 et 10 sont analogues aux figures 4 et 5. Du fait de la valeur plus importante de la progression de sphère sur la surface, le gradient de cylindre atteint aussi des valeurs plus importantes dans le deuxième mode de réalisation que dans le premier; sont représentées à la figure 9 les isopentes 0,50 à 3,00 dioptries/mm, avec un pas de 0,50 dioptries/mm. Dans la zone de vision de loin, définie comme indiqué plus haut, la pente de cylindre (ou gradient de cylindre) est toujours inférieure ou égale à 0,50 dioptrie/mm; cette inégalité est aussi vérifiée dans la partie supérieure de la lentille, pour des ordonnées supérieures ou égales à 8 mm, quelles que soient les valeurs de l'abscisse. Le gradient de cylindre est inférieur à 1 dioptrie/mm pour la partie de la lentille d'ordonnée supérieure ou égale à 5 mm. Dans les parties inférieures droite et gauche de la lentille, définies comme en référence à la figure 4, le gradient de cylindre est aussi inférieur ou égale à 1 dioptrie/mm. Enfin, le gradient de cylindre présente des valeurs inférieures ou égales à 2 dioptrie/mm sur toute la surface de la lentille, sauf sur la partie de la lentille autour de la verticale, dans la partie inférieure de la lentille. Les valeurs supérieures ou égales à 2 dioptrie/mm sont atteintes dans une bande verticale de largeur inférieure à 10 mm, dans la partie inférieure de la lentille (y 0).

La lentille des figures 1 à 5 ou 6 à 10 se prescrit en considérant la prescription porteur en vision de loin ainsi que l'addition. La valeur de l'addition n'est toutefois pas utilisée pour un point de référence en vision de près, mais simplement pour choisir la lentille des figures 1 à 5 ou celle des figures 6 à 10. Dans un cas comme dans l'autre, la progression de puissance sur la lentille est inférieure à la prescription d'addition du porteur. On choisit typiquement la lentille des figures 1 à 5 pour un porteur presbyte ayant une prescription d'addition entre 1 et 1,75 dioptries, et la lentille des figures 6 à 10 pour un porteur presbyte ayant une prescription d'addition de 2 dioptries ou plus.

En vision de loin, la lentille fournit au porteur une correction qui correspond à la prescription. Le montage de la lentille diffère du montage d'une lentille multifocale progressive de l'état de la technique dans la mesure où la lentille est montée dans la monture de sorte à présenter la puissance nécessaire en vision de loin au centre optique. Le point de centrage est ainsi au centre optique de la lentille ou au centre géométrique de la lentille avant détourage - alors que dans une lentille ophtalmique classique, la croix de montage est au dessus du centre optique ou du centre géométrique de la lentille. La puissance nécessaire peut être obtenue, comme dans l'état de la technique, par usinage d'une face arrière pour assurer que la puissance est identique à la puissance prescrite.

Le montage de la lentille ne nécessite donc qu'une mesure classique du demi-écart pupillaire de vision de loin, ainsi qu'une mesure de la hauteur, pour déterminer la hauteur à laquelle doit être placé le centre du verre dans la monture. Le centre du verre est donc utilisé comme point de centrage pour le montage. La lentille est de préférence montée avec l'axe de symétrie orienté verticalement, permettant ainsi une utilisation de la même lentille pour l'oeil droit et pour l'oeil gauche. Le montage de la lentille dans la monture s'effectue simplement en mesurant la position dans la monture du regard du sujet en vision de loin; cette mesure s'effectue de façon classique, le sujet portant la monture et regardant à l'infini. On monte ensuite la lentille dans la monture, de sorte que le centre optique se trouve à la position mesurée.

Sur le plan optique, la lentille assure au porteur une correction adaptée, pour la conduite automobile. En effet, l'invention repose sur une analyse des cibles visuelles des porteurs dans un véhicule automobile et du comportement dynamique des porteurs par rapport à ces cibles. Cette analyse consiste d'abord à identifier les cibles visuelles, qui peuvent comprendre les rétroviseurs, le compteur de vitesse et le bouton de contrôle du débit d'air et/ou de l'autoradio. L'analyse de ces cibles - en termes de positions angulaires et de proximités par rapport au conducteur - montre que ne sont en fait sollicitées pour l'essentiel que la vision de loin - pour la conduite et les rétroviseurs - ainsi que la vision intermédiaire - pour les autres cibles. Typiquement pour cette activité, la vision de près n'est que rarement sollicitée. La lentille permet d'assurer une correction adaptée, par une large zone de vision de près et une zone de vision intermédiaire suffisante.

L'analyse du comportement dynamique des porteurs lors de la conduite démontre qu'ils bougent très peu la tête, sans doute à cause de la notion de danger. Pour cette même raison, la période de détournement du regard est très courte. Cette stratégie oeil/tête est facilement satisfaite dans la lentille de l'invention, à l'aide d'une zone de vision de loin étendue, avec de faibles valeurs de cylindre dans les zones latérales. Ceci facilite la vision latérale et la vision dynamique, même pour de très courtes excursions latérales du regard.

La vision intermédiaire est utilisée en conduite automobile pour les équipements de navigation - compteur de vitesse et autres. Ces équipements sont généralement disposés devant le conducteur et la lentille de l'invention assure une correction appropriée pour que le porteur puisse, toujours quasiment sans bouger la tête, voir clairement le compteur de vitesse. Ceci est assuré par la faible longueur de progression et par l'utilisation d'une méridienne verticale. La vision intermédiaire est encore utilisé pour d'autres types d'équipements-autoradio ou contrôle de la circulation d'air ou de la climatisation. Il s'avère toutefois que ces équipements ne sont en pratique utilisés qu'à l'arrêt, avec une stratégie de vision qui implique plus de mouvements de la tête. Le fait que la lentille ne présente qu'un couloir de vision intermédiaire d'une largeur limitée n'est donc pas pénalisant.

La lentille des deux exemples décrits plus haut peut être obtenue, par optimisation d'une surface suivant les méthodes d'optimisations connues en soi et décrites dans les documents de l'état de la technique cités plus haut relatifs aux lentilles multifocales progressives. On peut utiliser pour l'optimisation un ou plusieurs des critères exposés dans la description qui précède en référence aux figures 1 à 10, et notamment :

- une progression de sphère moyenne de 0,50 dioptrie ou plus; on peut utiliser les valeurs de 0,75 et 1, 25 dioptries proposées dans les exemples, ou encore d'autres valeurs dans les plages [0,50; 0,90] ou [1,05; 1,50] dioptries ;
- une zone de vision de loin - les points de cylindre inférieur ou égal à 0,25 dioptries dans la partie supérieure de la lentille - recouvrant un secteur angulaire d'au moins 160° centré sur le centre optique; on peut prévoir un secteur angulaire d'au moins 180° pour une progression de sphère moyenne dans la plage [0,50; 0,90] dioptries ;
- une sphère moyenne sensiblement constante sur la méridienne ombilique dans la zone de vision de loin, par exemple des variations de sphère moyenne inférieures ou égales à 0,2, voire 0,1 dioptrie au-dessus du centre optique de la lentille ;
- une longueur de progression inférieure ou égale à 12 mm, la longueur de progression étant définie comme la distance verticale entre le centre optique et le point de la méridienne pour lequel la sphère moyenne est supérieure de 85% de la progression à la sphère moyenne au centre optique.

Ces critères peuvent être combinés à d'autres, notamment à un ou plusieurs des critères proposés dans les exemples précédents. On peut aussi utiliser un ou plusieurs des critères suivants :

- des variations de sphère inférieures ou égales à 0,03 dioptries dans la zone de vision de loin pour une progression de sphère moyenne dans la plage [0,50; 0,90] dioptries ;
- des variations de sphère inférieures ou égales à 0,08 dioptries dans la zone de vision de loin, pour une progression de sphère moyenne dans la plage [1,05 ; 1,50] dioptries ;
- un cylindre maximal dans la zone de vision de loin inférieur à la progression de sphère moyenne ;
- une sphère moyenne sensiblement constante sur la méridienne dans la partie inférieure de la lentille, par exemple pour des points de la méridienne plus de 15 mm en dessous du centre optique de la lentille.

Le choix de ces critères permet d'obtenir, par optimisation, une lentille. L'homme du métier comprend aisément que la lentille en cause ne présente pas nécessairement des valeurs correspondant exactement aux critères imposés; par exemple, il n'est pas indispensable que la valeur supérieure de la variation de sphère moyenne soit atteinte.

Dans les exemples d'optimisation ci-dessus, on a proposé d'optimiser une seule des faces des lentilles. Il est clair que dans tous ces exemples, on peut échanger facilement le rôle des surfaces avant et arrière. On peut aussi répartir indifféremment la progression de sphère sur l'une ou l'autre des deux surfaces de la lentille, ou partiellement sur une face et l'autre, du moment que des cibles optiques similaires à celles de la lentille décrite sont atteintes.

## Revendications

1. Une lentille ophtalmique dédiée à la vision de loin et à la vision intermédiaire, présentant une surface complexe, la lentille ayant un centre optique correspondant à un point de centrage matérialisé sur la lentille qui est utilisé par un opticien pour le montage de la lentille dans une monture, une méridienne sensiblement ombilique, une progression de sphère moyenne sur la méridienne supérieure ou égale à 0,5 dioptries, la surface complexe ayant :

    - dans sa partie supérieure, une zone de vision de loin formée de points de cylindre inférieur ou égal à 0,25 dioptrie et recouvrant un secteur angulaire centré sur le centre optique sur un diamètre de 40 mm et d'un angle de 160°;
    - une sphère moyenne sensiblement constante sur la méridienne dans la zone de vision de loin ;
    - une longueur de progression inférieure ou égale à 12 mm, la longueur de progression étant définie comme la distance verticale entre le centre optique et le point de la méridienne pour lequel la sphère moyenne est supérieure de 85% de la progression à la sphère moyenne au centre optique.

2. La lentille de la revendication 1, **caractérisée en ce que** la méridienne est rectiligne.

3. La lentille de la revendication 2, **caractérisée en ce que** la surface complexe est symétrique par rapport à la méridienne.

4. La lentille de la revendication 1, 2 ou 3, **caractérisée en ce qu'**elle présente, pour la partie de la lentille plus de 5 mm en dessous du centre optique, une distance entre les lignes d'isocylindre 0.50 dioptries inférieure ou égale à 10 mm.

5. La lentille de l'une des revendications 1 à 4, **caractérisée en ce qu'**elle présente, dans la zone de vision de loin, une variation de sphère moyenne inférieure ou égale à 0,025 dioptries, pour une progression de sphère moyenne inférieure ou égale à 0,90 dioptrie.

6. La lentille de l'une des revendications 1 à 4, **caractérisée en ce qu'**elle présente, dans la zone de vision de loin, une variation de sphère moyenne inférieure ou égale à 0,08 dioptries, pour une progression de sphère moyenne entre 1,05 et 1,40 dioptries.

7. La lentille de l'une des revendications 1 à 5, **caractérisée en ce qu'**elle présente une progression de sphère moyenne entre 0,5 et 0,9 dioptries.

8. La lentille de l'une des revendications 1 à 4 et 6, **caractérisée en ce qu'**elle présente une progression de sphère moyenne entre 1,05 et 1,40 dioptries.

9. Un équipement visuel comportant au moins une lentille selon l'une des revendications précédentes.

10. Un procédé de montage d'une lentille selon l'une des revendications 1 à 8 dans un équipement visuel, comprenant :

- la mesure de la position dans l'équipement du regard du sujet en vision de loin, et
- le montage dans l'équipement d'une lentille, avec le centre optique, correspondant au point de centrage matérialisé sur la lentille, à la position mesurée.

**Patentansprüche**

1. Brillenglas, das für die Fernsicht und die Zwischensicht bestimmt ist, das eine komplexe Oberfläche aufweist, wobei das Brillenglas einen optischen Mittelpunkt, der einem auf dem Brillenglas hergestellten Zentrierungspunkt entspricht, der von einem Optiker für die Montage des Brillenglas in einer Brillenfassung verwendet wird, einen im Wesentlichen hohlen Meridian, eine mittlere Sphärenprogression auf dem Meridian größer oder gleich 0,5 Dioptrien aufweist, wobei die komplexe Oberfläche umfasst:

- in ihrem oberen Teil eine Fernsichtzone, die von Zylinderpunkten kleiner oder gleich 0,25 Dioptrien gebildet ist und einen Winkelsektor abdeckt, der auf den optischen Mittelpunkt auf einem Durchmesser von 40 mm und einem Winkel von 160° zentriert ist;
- eine im Wesentlichen konstante mittlere Sphäre auf dem Meridian in der Fernsichtzone;
- eine Progressionslänge kleiner oder gleich 12 mm, wobei die Progressionslänge als der vertikale Abstand zwischen dem optischen Mittelpunkt und dem Punkt des Meridians, für den die mittlere Sphäre um 85% der Progression größer als die mittlere Sphäre im optischen Mittelpunkt ist, definiert ist.

2. Brillenglas nach Anspruch 1, **dadurch gekennzeichnet, dass** der Meridian geradlinig ist.

3. Brillenglas nach Anspruch 2, **dadurch gekennzeichnet, dass** die komplexe Oberfläche zum Meridian symmetrisch ist.

4. Brillenglas nach Anspruch 1, 2 oder 3, **dadurch gekennzeichnet, dass** es für den Teil des Brillenglases mehr als 5 mm unter dem optischen Mittelpunkt einen Abstand zwischen den Isozylinderlinien 0,50 Dioptrien kleiner oder gleich 10 mm aufweist.

5. Brillenglas nach einem der Ansprüche 1 bis 4, **dadurch gekennzeichnet, dass** es in der Fernsichtzone eine mittlere Sphärenvariation kleiner oder gleich 0,025 Dioptrien für eine mittlere Sphärenprogression kleiner oder gleich 0,90 Dioptrien aufweist.

6. Brillenglas nach einem der Ansprüche 1 bis 4, **dadurch gekennzeichnet, dass** es in der Fernsichtzone eine mittlere Sphärenvariation kleiner oder gleich 0,08 Dioptrien für eine mittlere Sphärenprogression zwischen 1,05 und 1,40 Dioptrien aufweist.

7. Brillenglas nach einem der Ansprüche 1 bis 5, **dadurch gekennzeichnet, dass** es eine mittlere Sphärenprogression zwischen 0,5 und 0,9 Dioptrien aufweist.

8. Brillenglas nach einem der Ansprüche 1 bis 4 und 6, **dadurch gekennzeichnet, dass** es eine mittlere Sphärenprogression zwischen 1,05 und 1,40 Dioptrien aufweist.

9. Sehausrüstung, umfassend mindestens ein Brillenglas nach einem der vorhergehenden Ansprüche.

10. Verfahren zur Montage eines Brillenglases nach einem der Ansprüche 1 bis 8 in einer Sehausrüstung, umfassend:

> - das Messen der Position der Sehlinie des Subjekts in Fernsicht in der Ausrüstung, und
> - Montage eines Brillenglases in der Ausrüstung mit dem optischen Mittelpunkt, der dem auf dem Brillenglas hergestellten Zentrierungspunkt an der gemessenen Position entspricht.

**Claims**

1. Ophthalmic lens dedicated to distance vision and to intermediate vision, having a complex surface, the lens having: an optical centre corresponding to a centration point marked on the lens and that is used by an optician to mount the lens in a frame, a substantially umbilical meridian, and a mean-sphere progression on the meridian of 0.5 dioptres or more, the complex surface having:

> - in its upper portion, a distance-vision zone formed from points of cylinder lower than or equal to 0.25 dioptres and covering an angular sector centred on the optical centre and of 40 mm diameter and 160° angle;
> - a mean sphere that is substantially constant on the meridian in the distance-vision zone;
> - a progression length smaller than or equal to 12 mm, the progression length being defined as the vertical distance between the optical centre and that point on the meridian for which the mean sphere is higher by 85% of the progression than the mean sphere at the optical centre.

2. Lens according to Claim 1, **characterized in that** the meridian is rectilinear.

3. Lens according to Claim 2, **characterized in that** the complex surface is symmetric with respect to the meridian.

4. Lens according to Claim 1, 2 or 3, **characterized in that**, in the portion of the lens more than 5 mm below the optical centre, the distance between the 0.50-dioptre isocylinder lines is smaller than or equal to 10 mm.

5. Lens according to one of Claims 1 to 4, **character-**

**ized in that**, in the distance-vision zone, the mean sphere varies by 0.025 dioptres or less for a mean-sphere progression of 0.90 dioptres or less.

6. Lens according to one of Claims 1 to 4, **characterized in that**, in the distance-vision zone, the mean sphere varies by 0.08 dioptres or less for a mean-sphere progression between 1.05 and 1.40 dioptres.

7. Lens according to one of Claims 1 to 5, **characterized in that** it has a mean-sphere progression between 0.5 and 0.9 dioptres.

8. Lens according to one of Claims 1 to 4 and 6, **characterized in that** it has a mean-sphere progression between 1.05 and 1.40 dioptres.

9. Piece of visual equipment including at least one lens according to one of the preceding claims.

10. Method for mounting a lens according to one of Claims 1 to 8 in a piece of visual equipment, comprising:

> - measuring the position in the piece of equipment of the distance-vision gaze of the subject; and
> - mounting, in the piece of equipment, a lens, with the optical centre, corresponding to the centration point marked on the lens, in the measured position.

Fig. 1

Fig. 2

Fig. 3

Fig. 4

Fig. 5

Hauteur (mm)

C1, C2 Sphere (Dioptrie)

fig. 6

fig. 7

fig. 8

fig. 9

fig. 10

EP 1 756 654 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2699294 A
- US 5270745 A
- US 5272495 A
- FR 2683642 A
- FR 2704327 A
- FR 2588973 A
- FR 2769997 A
- FR 0309787